# EUROPEAN PATENT APPLICATION

(11) **EP 4 675 900 A1**
(43) Date of publication of application: **07.01.2026**
(21) Application number: 24764006.3
(22) Date of filing: 29.02.2024
(51) Int. Cl.: H02K 15/04, H02K 3/50

(54) **BUS-BAR SUBSTRATE, BUS-BAR SUBSTRATE DEVICE, STATOR, AND STATOR MANUFACTURING METHOD**

(30) Priority: 01.03.2023 JP 2023030930; 01.03.2023 JP 2023030932
(71) Applicant: Sumitomo Bakelite Co., Ltd., Shinagawa-ku Tokyo 140-0002 (JP)
(72) Inventor: KURODA, Hirofumi, Tokyo 140-0002 (JP); KOSAKA, Wataru, Tokyo 140-0002 (JP); YAMAMOTO, Shinya, Tokyo 140-0002 (JP); NISHIKAWA, Atsunori, Tokyo 140-0002 (JP); HARADA, Takahiro, Tokyo 140-0002 (JP); SUGIHARA, Kotaro, Tokyo 140-0002 (JP)
(74) Representative: Müller-Boré & Partner Patentanwälte PartG mbB
(86) International application number: PCT/JP2024/007533
(87) International publication number: WO 2024/181529

(57) **Abstract**

A bus-bar substrate (10) includes a resin substrate (11) and a bus bar (30) formed of a conductive metal, in which the bus bar (30) has planar bus-bar conductive portions (a first planar bus bar (31) and a second planar bus bar (32)) formed in a planar shape on one surface (here, an upper surface (12)) of the resin substrate (11), and the surface (the upper surface (12)) of the resin substrate (11) on which the planar bus-bar conductive portions (the first planar bus bar (31) and the second planar bus bar (32)) are provided is such that the planar bus-bar conductive portions (the first planar bus bar (31) and the second planar bus bar (32)) and the resin substrate (11) are flush with each other.

## Description

### TECHNICAL FIELD

The present invention relates to a bus-bar substrate, a bus-bar substrate device, a stator, and a stator manufacturing method.

### BACKGROUND ART

In relation to rotating electrical machines such as motors (engines) and generators, a technique is known in which, when accommodating a coil in a slot provided in a stator, insulating paper or resin material is filled in the slot to ensure insulation between the slot and the coil (refer to Patent Document 1, for example).

Patent Document 1 discloses a technique in which resin is injected between a conductor (coil) and the peripheral wall of a slot and cured to form an insulating layer. In addition, the coil is made to have a desired coil winding structure by accommodating a straight rectangular wire in the slot and connecting the portions protruding from the ends of the slot by welding or the like.

### RELATED DOCUMENT

### PATENT DOCUMENT

[Patent Document 1] Japanese Patent No. 6814568

### SUMMARY OF THE INVENTION

### TECHNICAL PROBLEM

There is a growing demand for the miniaturization of rotating electrical machines and, as part thereof, there is a growing demand for techniques that realize a lower profile in a motor while ensuring insulating properties and heat dissipation. For example, in motors in which rectangular wires are arranged in stator slots as coils, a structure is adopted in which U-shaped rectangular wires referred to as segment conductors are accommodated in the slots and the protruding portions at the ends of the slots are bent and connected together by welding. The welded portions of the coil have been a problem in lowering the profile.

The present invention was created in consideration of such circumstances and has an object of providing a technique that realizes a lower profile in rotating machines such as motors.

### SOLUTION TO PROBLEM

According to the present invention, the following techniques are provided.
1. A bus-bar substrate including an insulating substrate, and a bus bar formed of a conductive metal, in which the bus bar has planar bus-bar conductive portions formed in a planar shape on one surface of the insulating substrate, and a surface of the insulating substrate on which the planar bus-bar conductive portions are provided is such that the planar bus-bar conductive portions and the insulating substrate are flush with each other.
2. The bus-bar substrate according to 1., in which the bus bar does not protrude beyond an outer shape of the insulating substrate.
3. The bus-bar substrate according to 1. or 2., in which the insulating substrate is formed of a resin composition cured body, and a linear expansion coefficient of the cured body at a temperature equal to or lower than a glass transition temperature is 50 ppm/K or less.
4. The bus-bar substrate according to 1. or 2., in which the insulating substrate is formed of a resin composition cured body, and the resin composition includes an epoxy resin or a phenol resin.
5. The bus-bar substrate according to 1. or 2., further including a through hole that penetrates both the insulating substrate and the planar bus-bar conductive portions.
6. The bus-bar substrate according to 5., in which the through hole functions as a positioning means for a rectangular wire to be arranged in a slot.
7. The bus-bar substrate according to 1. or 2., in which the insulating substrate is formed of a resin composition cured body, and a thermal conductivity of the cured body is 0.5 W/(m·K) or more.
8. A bus-bar substrate device formed by stacking a plurality of the bus-bar substrates according to 1. or 2.
9. The bus-bar substrate device according to 8., in which the bus-bar substrate device is attached to at least one end of a stator of a motor in an axial direction, and the bus bar forms a part of a coil winding that is arranged to span between slots in the stator.
10. The bus-bar substrate device according to 9., in which the coil winding is a rectangular wire, the rectangular wire has a vertical coil wire arranged in the slot, and an end of the vertical coil wire extending from the slot is electrically connected to the bus bar.
11. The bus-bar substrate device according to 10., further including a through hole through which the end of the vertical coil wire is inserted and guided to be connectable to the bus bar.
12. A stator for use in a motor, the stator including the bus-bar substrate device according to 8., provided at at least one end in an axial direction.
13. The stator according to 12., in which the stator has an annular shape when viewed from the end in the axial direction, and the bus-bar substrate device is formed as a single annular-shaped element or a collective element of a plurality of elements arranged in a circumferential direction to form an annular shape when viewed from the end in the axial direction.
14. The stator according to 12., in which a vertical coil wire is a bare wire that is not covered with an insulating member.
15. A method for manufacturing a stator having a coil wire arranged between slots, the method including a preparation step of preparing a bus-bar substrate having an insulating substrate, a bus bar formed of a conductive metal, and a through hole that penetrates both the insulating substrate and the bus bar, a bus-bar substrate arrangement step of arranging the bus-bar substrate at an axial direction end of the stator, and a bus bar-coil connection step of arranging a vertical coil wire that forms the coil wire in a slot in the stator and inserting the vertical coil wire through the through hole of the bus-bar substrate to electrically connect the bus bar and the vertical coil wire.
16. The method for manufacturing a stator according to 15., in which, in the bus-bar substrate arrangement step, a plurality of the bus-bar substrates are stacked and arranged one by one at one axial direction end of the stator.
17. The method for manufacturing a stator according to 15. or 16., the method further including a slot sealing step of injecting a sealant into the slots after the bus bar-coil connection step is performed at least at one axial direction end of the stator.
18. The method for manufacturing a stator according to 17., in which the sealant includes an epoxy resin or a phenol resin as a resin composition.
19. The method for manufacturing a stator according to 18., in which the insulating substrate is formed of a resin composition cured body, and the resin composition of the insulating substrate is identical to the resin composition of the sealant.
20. The method for manufacturing a stator according to 15. or 16., in which the bus bar-coil connection step electrically connects the vertical coil wire and the bus bar using at least one type of bonding selected from the group consisting of laser welding bonding, solder bonding, and conductive adhesive bonding.
21. The method for manufacturing a stator according to 15. or 16., in which the bus bar-coil connection step positions the vertical coil wire in the slot by inserting the vertical coil wire through the through hole.
22. The method for manufacturing a stator according to 15. or 16., in which the vertical coil wire is a bare wire that is not covered with an insulating member.

### ADVANTAGEOUS EFFECTS OF INVENTION

According to the present invention, it is possible to realize a lower profile in a rotating machine.

### BRIEF DESCRIPTION OF THE DRAWINGS

FIG. 1 is a longitudinal cross-sectional view of a motor according to an embodiment.
FIG. 2 is a transverse cross-sectional view of a motor according to the embodiment.
FIG. 3 is an enlarged view of one slot according to the embodiment.
FIGS. 4A and 4B are views of a bus-bar substrate device according to the embodiment.
FIG. 5 is a plan view of a bus-bar substrate according to the embodiment.
FIG. 6 is a cross-sectional view along A1-A1 in FIG. 5 according to the embodiment.
FIG. 7 is an enlarged view of a region B in FIG. 5 according to the embodiment.
FIG. 8 is a view showing a state in which coil ends are inserted through the through holes (a second through hole and a fourth through hole) shown in FIG. 7 according to the embodiment.
FIG. 9 is a cross-sectional view along A3-A3 in FIG. 7 according to the embodiment.
FIG. 10 is a cross-sectional view along A4-A4 in FIG. 8 according to the embodiment.
FIGS. 11A to 11C are cross-sectional views illustrating a coil bond portion according to the embodiment.
FIG. 12 is a flow chart showing steps for manufacturing a stator according to the embodiment.
FIGS. 13A to 13E are charts schematically showing the steps for manufacturing the stator according to the embodiment, focusing on the bonding of the coils by the bus-bar substrate.

### DESCRIPTION OF EMBODIMENTS

### <Outline>

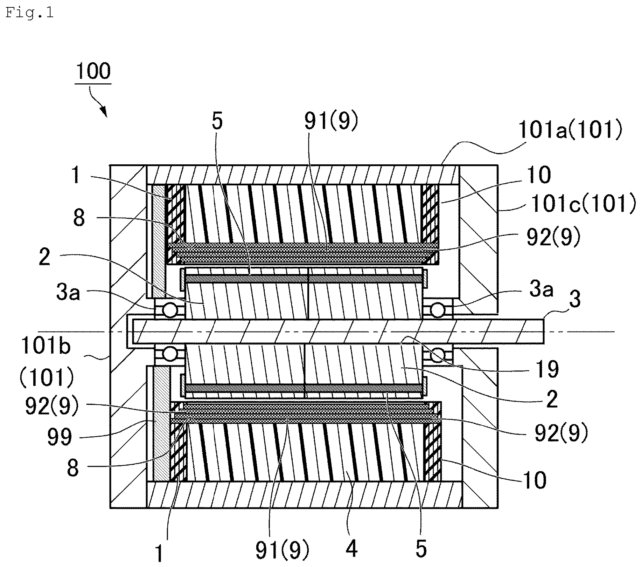

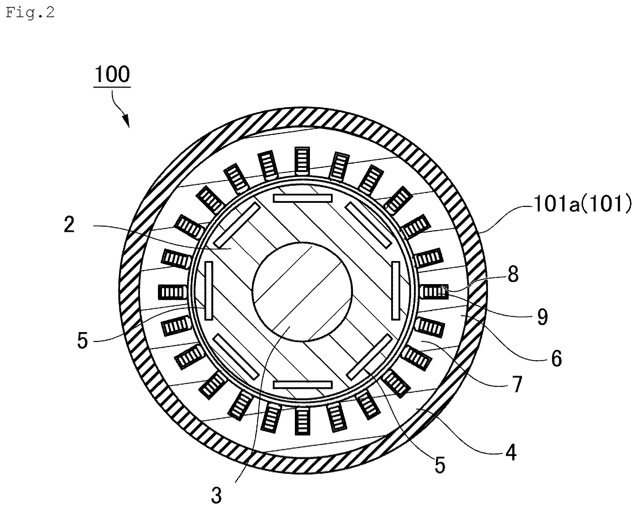

In the present embodiment, a description will be given of an example of an application to an electric motor (motor) as a rotating electrical machine (electric motor, generator, or dual-purpose electric motor/generator). FIG. 1 is a longitudinal cross-sectional view of a motor 100. FIG. 2 is a transverse cross-sectional view of the motor 100.

The outline of the present embodiment is as follows. In the motor 100, when coils 9 formed of a rectangular wire are provided in a stator 4 and portions (coil ends 92) protruding to the outside from the ends of slots 8 are linked to each other, the ends are not lined up and arranged to be bonded as in the related art, but are instead linked using a bus-bar substrate device 1 (a bus-bar substrate 10). Due to this, a lower profile is realized for the portions protruding from the slots 8 in the coil 9.

### <Basic Structure of Motor 100>

The motor 100 includes a rotor 2, the stator 4, the coils 9, the bus-bar substrate device 1, and an inverter device 99, which are accommodated inside a case 101. The coil ends 92 of the coils 9 are linked by a bus bar 30 of the bus-bar substrate device 1.

The case 101 is formed to have a cylindrical portion 101a and side plate portions 101b and 101c that close the cylindrical portion 101a at both ends in the axial direction. As the material of the case 101, it is possible to use, for example, an aluminum alloy (a casting), a resin material, or a combination of the above.

### <Rotor 2>

The rotor 2 is accommodated in the case 101. A rotating shaft 3 is attached to the center of the rotor 2 as an output shaft. Both ends of the rotating shaft 3 are supported by the side plate portions 101b and 101c via bearings 3a. Accordingly, the rotor 2 is rotatable centering on the rotating shaft 3.

Permanent magnets 5 are embedded in the rotor 2. Specifically, a plurality of permanent magnets 5 are arranged on the same circumference at equal intervals. In this case, the magnetic poles of the adjacent permanent magnets 5 are set to be different from each other.

The cylindrical stator 4 is arranged and fixed on the inner peripheral side of the cylindrical portion 101a so as to surround the outer periphery of the rotor 2. A minute gap (air gap) is provided between the inner peripheral surface of the stator 4 and the outer peripheral surface of the rotor 2.

### <Stator 4>

The stator 4 is provided by stacking and tightly fixing a plurality of electromagnetic steel sheets in the axial direction, and is provided with a yoke 6 provided in a ring shape when viewed from the axial direction end as shown in FIG. 2, and a plurality of teeth 7 extending from the yoke 6 toward the rotor 2 side (inner peripheral side). The plurality of teeth 7 are disposed at equal intervals in the circumferential direction.

### <Teeth 7>

The teeth 7 are provided to correspond to the permanent magnets 5 of the rotor 2 described above, and by sequentially exciting each of the coils 9, the rotor 2 rotates due to attraction and repulsion with the corresponding permanent magnets 5.

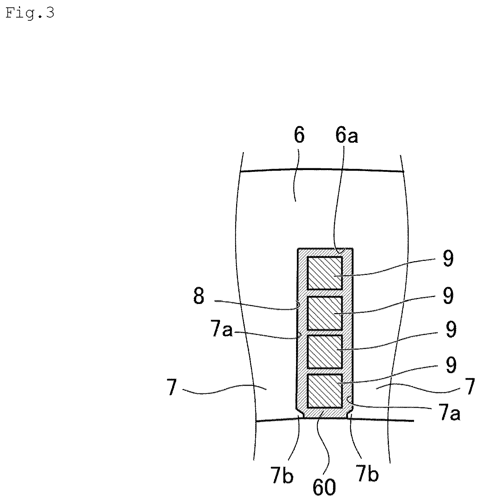

The teeth 7 have a large width in a circumferential direction on the outer peripheral side, a small width on the inner peripheral side, and are tapered toward the inner peripheral side. Teeth tips 7b (refer to FIG. 3) facing each other in the circumferential direction are formed at the ends on the inner peripheral side of the teeth 7 so that the width of the slots 8 is reduced.

### <Slot 8>

FIG. 3 shows an enlarged view of one slot 8. The slot 8 is the space between the adjacent teeth 7 and is a region defined by wall surfaces 7a of the teeth 7 that face each other along the radial direction and an inner peripheral side wall surface 6a of the yoke 6. The space between the teeth tips 7b is an opening on the inner peripheral side of the slot 8. A plurality of the coils 9 and a sealing layer 60 are provided in the slot 8.

### <Sealing Layer 60>

The sealing layer 60 is a cured resin material and is provided to fill the gaps between the coils 9 in a state where a plurality of the coils 9 are arranged in the slots 8.

### <Physical Properties of Sealing Layer 60>

For example, the physical properties of the cured resin material constituting the sealing layer 60 are as follows.

The cured resin material has a thermal conductivity of 0.5 W/(m·K) or more. The lower limit of the thermal conductivity is preferably 1.0 W/(m·K) or more, and more preferably 2 W/(m·K) or more. The upper limit of the thermal conductivity is not particularly limited, but is 10 W/(m·K) as an actual value.

A glass transition temperature Tg of the resin composition of the sealing layer 60 is 120°C or higher, preferably 140°C or higher, and more preferably 160°C or higher. When the glass transition temperature Tg is within the above range, the motor 100 can be used at high temperatures and is resistant to the heat generated from the coil 9, such that the motor 100 can be used at high output.

The resin composition of the sealing layer 60 will be specifically described below.

### <Material of Sealing Layer 60>

The resin composition of the sealing layer 60 preferably contains a thermosetting resin (A), a filler material (B), a curing agent (C), and the like.

### (Thermosetting Resin (A))

Examples of the thermosetting resin (A) include an epoxy resin, a cyanate resin, a polyimide resin, a benzoxazine resin, an unsaturated polyester resin, a phenol resin, a melamine resin, a silicone resin, a bismaleimide resin, a phenoxy resin, and an acrylic resin. As the thermosetting resin (A), one of the above kinds may be used alone, or two or more may be used in combination.

Among these, an epoxy resin, a phenol resin, and a phenoxy resin are preferable as the thermosetting resin (A) from the viewpoint of high insulating properties. An epoxy resin is particularly preferable from the viewpoint of ensuring the fluidity in an extremely narrow portion during molding.

Examples of the epoxy resin include bisphenol-type epoxy resins such as a bisphenol A-type epoxy resin, a bisphenol F-type epoxy resin, a bisphenol E-type epoxy resin, a bisphenol S-type epoxy resin, a bisphenol M-type epoxy resin (4,4'-(1,3-phenylenediisopridiene)bisphenol epoxy resin), a bisphenol P-type epoxy resin (4,4'-(1,4-phenylenediisopridiene)bisphenol epoxy resin), and a bisphenol Z-type epoxy resin (4,4'-cyclohexadiene bisphenol epoxy resin); novolac-type epoxy resins such as a phenol novolac-type epoxy resin, a cresol novolac-type epoxy resin, a trisphenol group methane-type novolac-type epoxy resin, a tetraphenol group ethane-type novolac-type epoxy resin, and a novolac-type epoxy resin having a condensed ring aromatic hydrocarbon structure; biphenyl-type epoxy resins; arylalkylene-type epoxy resins such as a xylylene-type epoxy resin and a biphenylaralkyl-type epoxy resin; naphthalene-type epoxy resins such as a naphthylene ether-type epoxy resin, a naphthol-type epoxy resin, a naphthalenediol-type epoxy resin, a bifunctional or tetrafunctional epoxy-type naphthalene resin, a binaphthyl-type epoxy resin, and a naphthalene aralkyl-type epoxy resin; anthracene-type epoxy resins; phenoxy-type epoxy resins; dicyclopentadiene-type epoxy resins; norbornene-type epoxy resins; adamantane-type epoxy resins; and fluorene-type epoxy resins. One of the above kinds may be used alone, or two or more may be used in combination.

Among the epoxy resins, one or two or more kinds selected from the group consisting of bisphenol-type epoxy resins, novolac-type epoxy resins, biphenyl-type epoxy resins, arylalkylene-type epoxy resins, naphthalene-type epoxy resins, anthracene-type epoxy resins, and dicyclopentadiene-type epoxy resins are preferable from the viewpoint of further improving the heat resistance and the insulation reliability.

Examples of the phenol resin include novolac-type phenol resins such as a phenol novolac resin, a cresol novolac resin, and a bisphenol A novolac resin, and resol-type phenol resins. One of the above kinds may be used alone, or two or more may be used in combination.

Among the phenol resins, a phenol novolac resin is preferable.

The content of the thermosetting resin (A) is preferably 1% by mass or more, and more preferably 5% by mass or more with respect to the total amount of the resin composition of the sealing layer 60. Meanwhile, the content is preferably 30% by mass or less, and more preferably 20% by mass or less with respect to the total amount of the resin composition of the sealing layer 60.

When the content of the thermosetting resin (A) is equal to or more than the above lower limit, the handleability of the resin composition of the sealing layer 60 is improved, the sealing layer 60 is easily formed in the slots 8, and the strength of the sealing layer 60 is improved.

When the content of the thermosetting resin (A) is equal to or less than the above upper limit, the linear expansion ratio and the elastic modulus of the inner sealing layer 60 are further improved and the thermal conductive properties are further improved.

### (Filler Material (B))

In the present embodiment, the filler material (B) is used from the viewpoint of improving the thermal conductive properties of, and obtaining strength in, the sealing layer 60.

As the filler material (B), an inorganic filler material is preferable, and a thermal conductive filler is particularly preferable. More specific examples of the filler material (B) include silica, alumina, boron nitride, aluminum nitride, and silicon carbide from the viewpoint of balancing the thermal conductive properties with the electrical insulating properties. One of the above kinds may be used alone, or two or more may be used in combination. Among these, alumina or boron nitride is preferable as the filler material (B).

The content of the filler material (B), that is, the content of the filler is preferably 60% by mass or more with respect to the total amount of the resin composition.

### (Curing Agent (C))

When an epoxy resin or a phenol resin is used as the thermosetting resin (A) in the resin composition, the curing agent (C) is preferably further contained.

As the curing agent (C), one or more selected from a curing catalyst (C-1) and a phenol-based curing agent (C-2) can be used.

Examples of the curing catalyst (C-1) include organic metal salts such as zinc naphthenate, cobalt naphthenate, tin octylate, cobalt octylate, bisacetylacetonato cobalt (II), and trisacetylacetonato cobalt (III); tertiary amines such as triethylamine, tributylamine, and 1,4-diazabicyclo[2.2.2]octane; imidazoles such as 2-phenyl-4-methylimidazole, 2-ethyl-4-methylimidazole, 2,4-diethylimidazole, 2-phenyl-4-methyl-5-hydroxyimidazole, and 2-phenyl-4,5-dihydroxymethylimidazole; organic phosphorous compounds such as triphenylphosphine, tri-p-tolylphosphine, tetraphenylphosphonium·tetraphenylborate, triphenylphosphine·triphenylborane, and 1,2-bis-(diphenylphosphino)ethane; phenol compounds such as phenol, bisphenol A, and nonylphenol; organic acids such as an acetic acid, a benzoic acid, a salicylic acid, and a p-toluenesulfonic acid; and mixtures thereof. As the curing catalyst (C-1), one of the above kinds and derivatives thereof can be used alone, or two or more of the above kinds and derivatives thereof can be used in combination.

The content of the curing catalyst (C-1) is not particularly limited, but is preferably 0.001% by mass or more and 1% by mass or less with respect to the total amount of the resin composition.

In addition, examples of the phenol-based curing agent (C-2) include novolac-type phenol resins such as a phenol novolac resin, a cresol novolac resin, a trisphenol methane-type novolac resin, a naphthol novolac resin, and an aminotriazine novolac resin; modified phenol resins such as a terpene-modified phenol resin and a dicyclopentadiene-modified phenol resin; aralkyl-type resins such as a phenol aralkyl resin having a phenylene skeleton and/or a biphenylene skeleton and a naphthol aralkyl resin having a phenylene skeleton and/or a biphenylene skeleton; bisphenol compounds such as bisphenol A and bisphenol F; and resol-type phenol resins, and one of the above kinds may be used alone, or two or more may be used in combination.

Among these, novolac-type phenol resins or resol-type phenol resins are preferable as the phenol-based curing agent (C-2) from the viewpoint of improving the glass transition temperature and reducing the linear expansion coefficient.

The content of the phenol-based curing agent (C-2) is not particularly limited, but is preferably 1% by mass or more, and more preferably 5% by mass or more with respect to the total amount of the resin composition. Meanwhile, the content is preferably 30% by mass or less, and more preferably 15% by mass or less with respect to the total amount of the resin composition.

### (Coupling Agent (D))

The resin composition may contain a coupling agent (D). The coupling agent (D) can improve the wettability of the interface between the thermosetting resin (A) and the filler material (B).

The coupling agent (D) is not particularly limited, but one or two or more coupling agents selected from, for example, an epoxy silane coupling agent, a cationic silane coupling agent, an aminosilane coupling agent, a titanate-based coupling agent, and a silicone oil-type coupling agent are preferably used.

The content of the coupling agent (D) is not particularly limited, but is preferably 0.05% by mass or more, and more preferably 0.1% by mass or more with respect to 100% by mass of the filler material (B). Meanwhile, the content is preferably 3% by mass or less, and more preferably 2% by mass or less with respect to 100% by mass of the filler material (B).

### (Phenoxy Resin (E))

Furthermore, the resin composition may contain a phenoxy resin (E). When the phenoxy resin (E) is contained, the flex resistance of the sealing layer 60 can be improved, additionally, the elastic modulus can be reduced and the stress relaxation force of the sealing layer 60 can be improved.

In addition, when the phenoxy resin (E) is contained, the viscosity increases, and thus the fluidity is reduced and the occurrence of voids and the like can be suppressed. In addition, when the sealing layer 60 is used in close contact with a metal member (that is, the teeth 7), the adhesion between the metal and the cured body of the resin composition can be improved.

Examples of the phenoxy resin (E) include a phenoxy resin having a bisphenol skeleton, a phenoxy resin having a naphthalene skeleton, a phenoxy resin having an anthracene skeleton, a phenoxy resin having a biphenyl skeleton, and the like. In addition, it is also possible to use a phenoxy resin having a structure having a plurality of these skeletons.

The content of the phenoxy resin (E) is preferably, for example, 3% by mass or more and 10% by mass or less with respect to the total amount of the resin composition.

### (Release Agent)

The resin composition preferably contains a release agent. Accordingly, releasability after molding can be increased. Examples of the release agent include natural wax such as carnauba wax, synthetic wax such as montanic acid ester wax and polyethylene oxide wax, higher fatty acids such as zinc stearate and metal salts thereof, and paraffin. One of the above kinds may be used alone, or two or more may be used in combination.

When a release agent is used, the content of the release agent is preferably 0.01% to 3% by mass, and more preferably 0.05% to 2% by mass based on the entire resin molding material. Accordingly, the releasability improving effect can be reliably obtained. As a result, the molding accuracy of the sealing layer 60 can be increased.

### (Other Components)

The resin composition may further contain an antioxidant, a leveling agent, and the like as long as the effects of the present invention are not impaired.

### <Coil 9>

The coil 9 is formed of a good conductor such as copper and has a coil body 91 formed of a rectangular wire with a rectangular cross-section, and the bus bar 30 that links the portions (the coil ends 92) in the coil body 91 that protrude to the outside from the ends of the slots 8 in the axial direction.

A detailed description will be given below, but the bus bar 30 is provided on the bus-bar substrate device 1 (the bus-bar substrate 10).

The coil bodies 91 are provided in a straight line and are accommodated in the slots 8. In this example, four of the coil bodies 91 are arranged to be spaced apart at predetermined distances in one slot 8 in a row in the radial direction (from the central axis side toward the outside).

The coil bodies 91 are insulated from each other by the sealing layer 60. In addition, the coil bodies 91 are precisely positioned by the bus-bar substrate device 1 (through holes 70) described below, thus, the coil bodies 91 are reliably spaced apart in the slots 8 and insulation is maintained. This makes it possible for the coil 9 to be a bare coil without an insulating coating. In addition, a sealing step of providing an insulating member (insulating paper) or the like on the wall surface of the slot 8 in advance was necessary in the related art, but is not necessary in the present embodiment.

### <Bus-Bar Substrate Device 1>

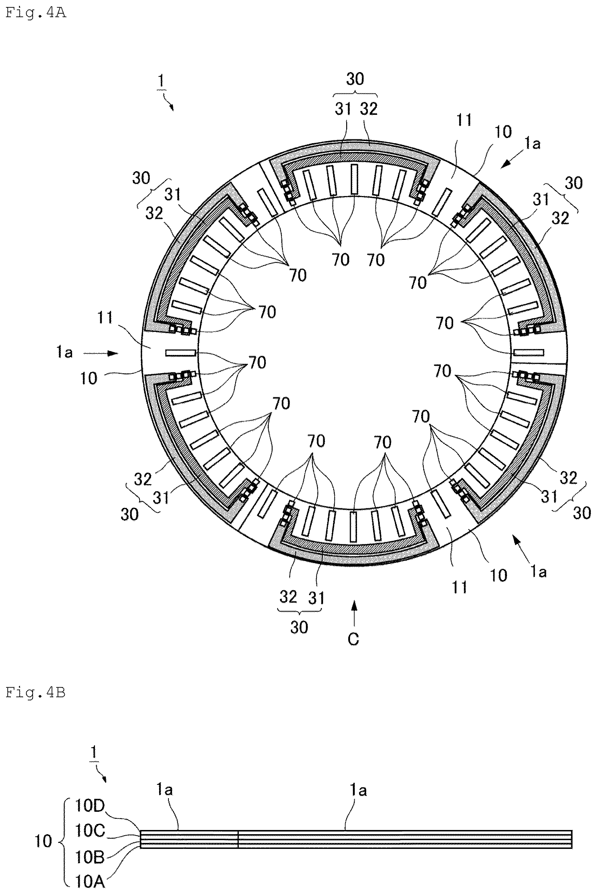

FIGS. 4A and 4B show the bus-bar substrate device 1. FIG. 4A is a plan view of the bus-bar substrate device 1 and FIG. 4B is a side view (view from the arrow C in FIG. 4A). Here, the structure of the bus-bar substrate device 1 corresponding to the stator 4 provided with 48 slots 8 is illustrated.

The bus-bar substrate device 1 is provided at both ends of the stator 4 in the axial direction, respectively, and links the coil ends 92 of two predetermined coil bodies 91.

The bus-bar substrate device 1 corresponds to the shape of the end in the axial direction of the stator 4 and is provided in an annular shape or a disk shape when viewed from the axial direction. The annular or disk-shaped bus-bar substrate device 1 may be formed as a single device, or may be divided into a plurality of elements (devices) in the circumferential direction. In the present embodiment, an example is shown of one constituent element (the bus-bar substrate device 1) when the annular shape is divided a plurality of times in the circumferential direction. Accordingly, when arranging the coils corresponding to all of the slots 8, the bus-bar substrate devices 1 are arranged in the circumferential direction according to the number of divisions. The number of divisions is appropriately selected according to the size of the stator 4 and the number of the slots 8.

As shown in FIG. 4A, the bus-bar substrate device 1 has divided bus-bar substrate devices 1a where the annular shape is divided into a plurality of equal parts in the circumferential direction when viewed from above. The divided bus-bar substrate devices 1a, which have been divided a plurality of times, will be simply described as the "bus-bar substrate device 1" when not distinguished from each other. One of the divided bus-bar substrate devices 1a is provided to correspond to 16 of the slots 8.

As shown in FIG. 4B, the bus-bar substrate device 1 (the divided bus-bar substrate devices 1a) is provided with a plurality of the stacked bus-bar substrates 10 having a plurality of the bus bars 30. Here, first to fourth planar bus bar resin substrates 10A to 10D are stacked in this order from the stator 4 side. The first to fourth planar bus bar resin substrates 10A to 10D will be referred to as the "bus-bar substrate 10" when not distinguished from each other.

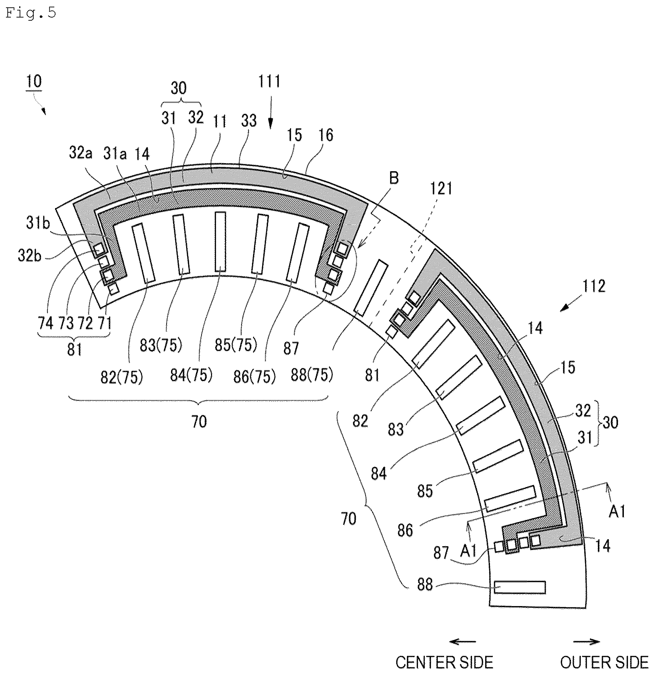

The bus-bar substrate device 1 has a plurality of the through holes 70 that penetrate in the thickness direction. As will be described below in FIG. 5, in the present embodiment, in a certain bus-bar substrate 10, the through holes 70 have bonding holes (a first through hole set 81 and a seventh through hole set 87) provided in a region corresponding to the slot 8 in a portion where the bus bar 30 and the coil 90 are connected, and non-bonding holes (second to sixth through hole sets 82 to 86 and an eighth through hole set 88) provided in a region corresponding to the slot 8 in a portion where the bus bar 30 and the coil 90 are not connected. As the bonding holes (the first through hole set 81 and the seventh through hole set 87), a plurality of holes (first to fourth square through holes 71 to 74 in FIG. 5) are provided according to the cross-sectional size of each of the coils 90. As the non-bonding holes (the second to sixth through hole sets 82 to 86 and the eighth through hole set 88), one common through hole (a fifth through hole 75) is provided for the four coils 90 arranged in the corresponding slot 8. Instead of the non-bonding holes (the second to sixth through hole sets 82 to 86 and the eighth through hole set 88), the first to fourth through holes 71 to 74 may be provided one by one for each of the coils 90.

The coil ends 92 of the coil body 91 protruding from the slot 8 are inserted through the through holes 70. The two predetermined through holes 70 are linked by the planar-shaped bus bar 30 and the coil ends 92 inserted through the through holes 70 are linked by the bus bar 30, such that the coil ends 92 of the two coil bodies 91 are electrically bonded.

It is possible to carry out the bonding of the coil ends 92 and the bus bar 30 using various types of bonding such as conductive adhesive bonding, solder bonding, and laser welding bonding.

### <Bus-Bar Substrate 10>

Here, a specific description will be given focusing on one bus-bar substrate 10.

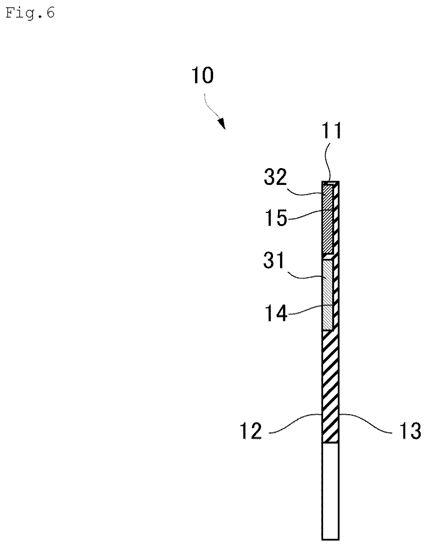

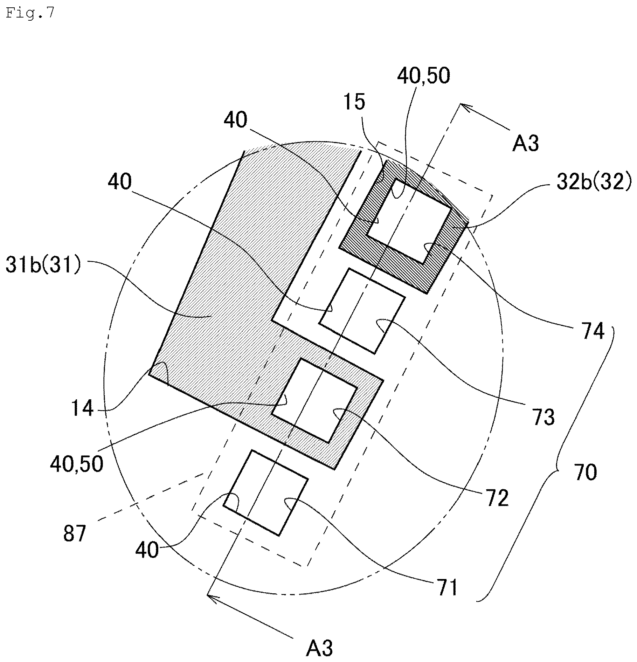

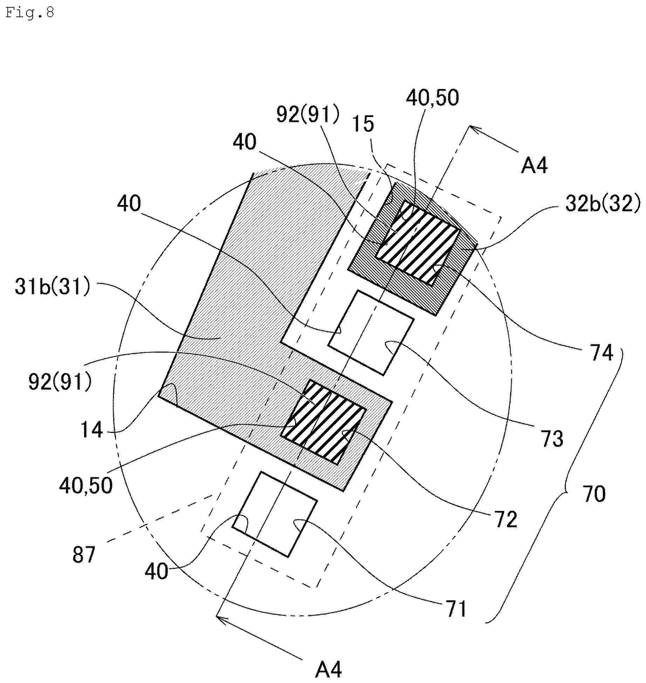

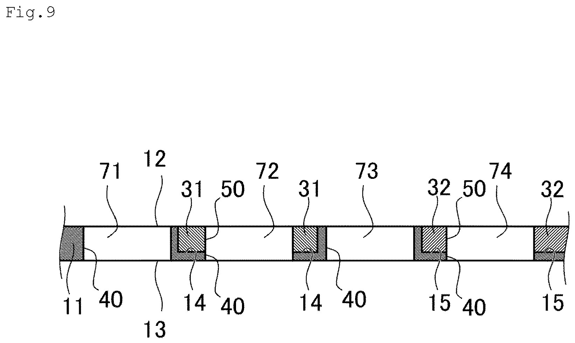

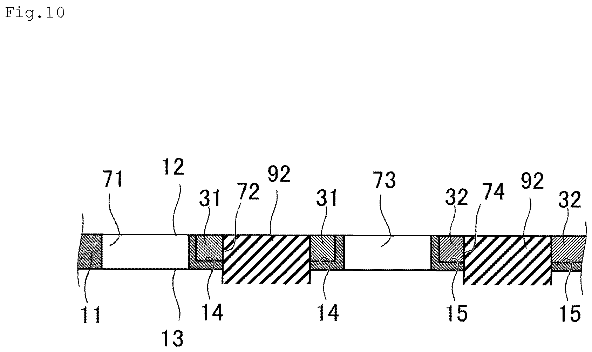

FIG. 5 shows a plan view of the bus-bar substrate 10. FIG. 6 shows a cross-sectional view along A1-A1 in FIG. 5. FIG. 7 shows an enlarged view of a region B in FIG. 5. FIG. 8 shows a state in which the coil ends 92 are inserted through the through holes 70 (a second through hole 72 and a fourth through hole 74) shown in FIG. 7. FIG. 9 shows a cross-sectional view along A3-A3 in FIG. 7. FIG. 10 shows a cross-sectional view along A4-A4 in FIG. 8.

It is possible to understand the bus-bar substrate device 1 (that is, one divided bus-bar substrate device 1a) as being divided into a plurality (two in this case) of first and second set regions 111 and 112, in which eight slots 8 adjacent in the circumferential direction form a set when viewed from above. A convenient boundary between the first and second set regions 111 and 112 is shown by a dashed line 121.

In each of the first and second set regions 111 and 112, the through holes 70 and the bus bars 30 (a first planar bus bar 31 and a second planar bus bar 32) are similarly provided. A description will be given below of the through holes 70 and bus bars 30 mainly using the configuration in the first set region 111 as representative.

The bus-bar substrate 10 has a resin substrate 11, a plurality of the bus bars 30, and a plurality of the through holes 70. The bus bars 30 include the first planar bus bar 31 and the second planar bus bar 32. Here, a configuration having two of the bus bars 30 (the first planar bus bar 31 and the second planar bus bar 32) is shown as an example, but, without being limited thereto, the configuration may be appropriately set depending on the number of divisions of the bus-bar substrate device 1, the number of the coil bodies 91 arranged in the slots 8, or the like. In addition, the shape and the through holes 70 to be linked vary depending on the positions where the bus-bar substrates 10 are stacked, that is, depending on which of the coil bodies 91 are to be bonded.

### <Resin Substrate 11>

The resin substrate 11 is a planar-shaped structure formed of a resin composition cured body.

It is possible for the resin composition of the resin substrate 11 to be identical to the material of the sealing layer 60 described above, and the resin composition preferably includes an epoxy resin or a phenol resin.

The linear expansion coefficient of the resin substrate 11 at a temperature equal to or lower than the glass transition temperature is 50 ppm/K or less. The linear expansion coefficient is preferably 40 ppm/K or less and more preferably 30 ppm/K or less. By setting the linear expansion coefficient in this manner, the difference in the linear expansion coefficient with the bus bar 30 is reduced and it is possible to suppress changes (reductions in bonding strength or separation) or the like in the bonding state between the resin substrate 11 and the bus bar 30 due to the influence of heat. As a result, even when a plurality of the bus-bar substrates 10 are stacked, it is possible to suppress deterioration of the stacking state (for example, the occurrence of gaps between the bus-bar substrates 10) caused by changes in the bonding state between the resin substrate 11 and the bus bar 30.

It is possible for the thickness of the resin substrate 11 to be, for example, 3 mm. From the viewpoint of lowering the profile of the bus-bar substrate device 1 obtained by stacking the resin substrates 11, the thinner the thickness of the resin substrate 11, the more preferable; however, taking into consideration the thickness of the bus bar 30 (the first planar bus bar 31 and the second planar bus bar 32) attached to the resin substrate 11, it is possible for the thickness to be, for example, 0.5 mm or more and 4 mm or less.

### <First Planar Bus Bar Arrangement Portion 14, Second Planar Bus Bar Arrangement Portion 15>

The resin substrate 11 has a first planar bus bar arrangement portion 14 and a second planar bus bar arrangement portion 15.

The first planar bus bar arrangement portion 14 is formed in a concave shape having a predetermined depth on one surface (here, an upper surface 12) of the resin substrate 11, and accommodates the first planar bus bar 31. The second planar bus bar arrangement portion 15 is formed in a concave shape having a predetermined depth on one surface (here, the upper surface 12) of the resin substrate 11, and accommodates the second planar bus bar 32.

The depths of the first planar bus bar arrangement portion 14 and the second planar bus bar arrangement portion 15 are set according to the thickness of the bus bar 30, more specifically, to the same thickness. In a state where the first planar bus bar 31 and the second planar bus bar 32 are arranged in the first planar bus bar arrangement portion 14 and the second planar bus bar arrangement portion 15 of the resin substrate 11, respectively, the upper surface 12 of the resin substrate 11 is flush. In addition, the first planar bus bar 31 and the second planar bus bar 32 do not extend in the direction (that is, the horizontal direction) of the outer shape of the resin substrate 11. That is, the first planar bus bar arrangement portion 14 and the second planar bus bar arrangement portion 15 are shaped such that the outer shapes of the first planar bus bar 31 and the second planar bus bar 32 fit therein, respectively. Accordingly, as understood from FIG. 5, when seen in a plan view, an outer peripheral line 33 (the outer shape) of the bus bar 30 arranged on the outermost side does not protrude beyond an outer peripheral line 16 (the outer shape) of the resin substrate 11.

### <Through Holes 70>

Here, for convenience, a set of the through holes 70 through which the coil ends 92 of the coil bodies 91 accommodated in the same slot 8 are inserted is treated as a through hole set. More specifically, in FIG. 5, in one set region (the first and second set regions 111 and 112, respectively), the first to eighth through hole sets 81 to 88 are provided in order from the left.

Four of the through holes 70, that is, the first to fourth through holes 71 to 74, are provided in each of the first through hole set 81 and the seventh through hole set 87 from the center side toward the outer side. Each of the first to fourth through holes 71 to 74 is formed in a substantially square shape to match the cross-sectional shape of the coil end 92 to be inserted. Here, the coil end 92 inserted through the second through hole 72 of the first through hole set 81 and the coil end 92 inserted through the second through hole 72 of the seventh through hole set 87 are linked by the first planar bus bar 31. The coil end 92 inserted through the fourth through hole 74 of the first through hole set 81 and the coil end 92 inserted through the fourth through hole 74 of the seventh through hole set 87 are linked by the second planar bus bar 32.

Meanwhile, the coil ends 92 inserted through the second to sixth through hole sets 82 to 86 and the eighth through hole set 88 are not connected to the bus bar 30. In the present embodiment, one common through hole (the fifth through hole 75) is provided in each of the second to sixth through hole sets 82 to 86 and the eighth through hole set 88. The common through hole (the fifth through hole 75) is provided in a rectangular shape that is slightly larger than the shape linking the first to fourth through holes 71 to 74. Below, the first to fifth through holes 71 to 75 will be described as the "through hole 70" when not distinguished from each other.

From the viewpoint of bonding the coil ends 92 together, the through hole 70 penetrates both the resin substrate 11 and the bus bar 30 in the region where the bus bar 30 is provided.

Specifically, the through hole 70 is formed in a state where a substrate-side through hole 40 provided in the resin substrate 11 and a bus bar-side through hole 50 provided in the bus bar 30 are stacked in the vertical direction. The substrate-side through hole 40 and the bus bar-side through hole 50 do not need to form completely closed holes when viewed from above, but need only to form a penetrating hole into which it is possible to completely insert the coil end 92 when the through hole 70 is viewed as a whole. In the region where the bus bar 30 is provided, the substrate-side through holes 40 provided in each bus bar arrangement portion and the bus bar-side through hole 50 arranged in the bus bar arrangement portion are provided to align. In the region where the bus bar 30 is not present, only the substrate-side through hole 40 is provided. Here, the second through hole 72 and the fourth through hole 74 have both the substrate-side through hole 40 and the bus bar-side through hole 50.

The size of the through holes 70 (here, the first to fourth through holes 71 to 74) linked by the bus bar 30 is set such that the outer shape of the coil end 92 abuts against the inner wall surface of the through hole 70. In reality, it is preferable to make the through hole 70 slightly larger than the outer shape of the coil end 92 from the viewpoint of smoothly inserting the coil end 92 into the through hole 70. Due to this, the coil body 91 is accurately positioned in the slot 8. In addition, regarding the shape and size of the through hole 70, required extra space is appropriately provided depending on the bonding method of the bus bar 30 and the coil end 92. The positioning function of the through hole 70 may be exhibited by the through hole 70 of one bus-bar substrate 10, or may be exhibited by the through holes 70 of a plurality of stacked bus-bar substrates 10. In addition, when positioning is performed using the through hole 70 of one bus-bar substrate 10, the bus-bar substrate 10 positioned using the coil body 91 may be different.

### <Bus Bar 30>

The bus bar 30 is formed of a planar-shaped conductive metal and, as described above, has the first planar bus bar 31 and the second planar bus bar 32. Although there is no particular limitation, it is possible to suitably use copper, aluminum, and alloys thereof as the conductive metal.

It is possible to set the thickness of the bus bar 30 (the first planar bus bar 31 and the second planar bus bar 32) according to the specifications of the motor 100, for example, from 0.3 mm to 3.0 mm. As long as it is possible for the motor 100 to realize the desired performance, the thicknesses of the first planar bus bar 31 and the second planar bus bar 32 may be the same or different, and further, the thicknesses of the bus bars 30 may differ between different bus-bar substrates 10.

In the bus-bar substrate 10 shown in FIG. 5, the first planar bus bar 31 is provided to link the second through hole 72 of the first through hole set 81 and the second through hole 72 of the seventh through hole set 87. Here, the first planar bus bar 31 has an arc-shaped portion 31a and foot portions 31b extending from both ends of the arc-shaped portion toward the second through holes 72. The second through holes 72 are formed at the tip portions of the foot portions 31b.

The second planar bus bar 32 is provided to link the fourth through hole 74 of the first through hole set 81 and the second through hole 72 of the seventh through hole set 87. Here, the second planar bus bar 32 has an arc-shaped portion 32a and foot portions 32b extending from both ends of the arc-shaped portion toward the fourth through holes 74. The fourth through holes 74 are formed at the tip portions of the foot portions 32b.

The first planar bus bar 31 and the second planar bus bar 32 are not bonded and are provided to be separated from the through holes 70 that are not related to the linking of the coil ends 92.

### <Coil Bonding Structure>

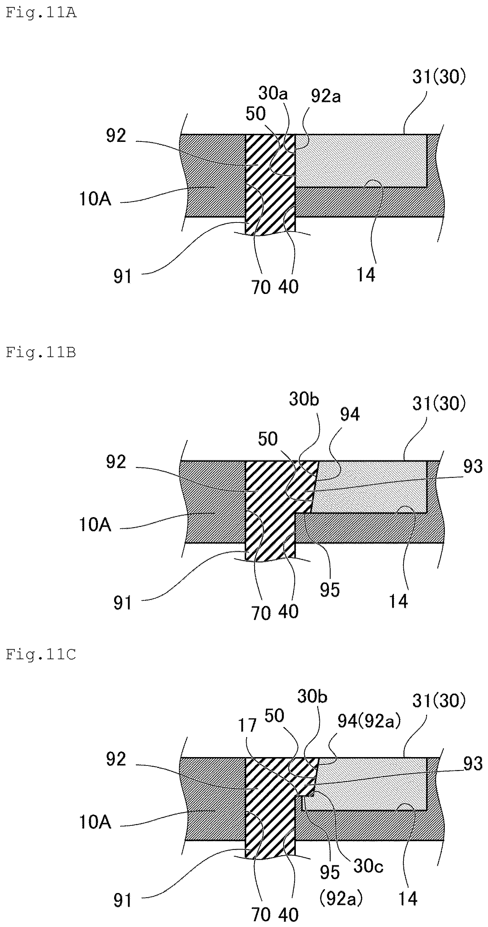

FIGS. 11A to 11C are views illustrating the bonding structure between the coil ends 92 of the coil 90 and the bus bar 30 (the first planar bus bar 31) and description will be given of three types of bonding structure examples here.

In the bonding structure of FIG. 11A, an example is shown in which the coil body 91 and the coil end 92 are formed in a straight line. In the bus bar-side through hole 50 of the bus bar 30, the surface facing the coil end 92 is a bus bar bonding surface 30a. The bus bar-side through hole 50 of the coil end 92 (more specifically, the surface facing the bus bar bonding surface 30a) is a coil bonding surface 92a. At this time, the coil bonding surface 92a and the bus bar bonding surface 30a are formed to have a vertical cross-section shape and are bonded by a bonding means such as conductive adhesive bonding, solder bonding, or laser welding bonding in a state of abutting each other.

In the bonding structure of FIG. 11B, the surface of the coil end 92 facing the bus bar 30 is provided with a protrusion 93 that protrudes in a hook-shape toward the bus bar 30 side. A lower surface 95 of the protrusion 93 is placed near the substrate-side through hole 40 of the first planar bus bar arrangement portion 14. The surface of the protrusion 93 on the bus bar 30 side is the coil bonding surface 92a formed into a reverse tapered surface (referred to as a "reverse tapered surface 94") with a predetermined inclination angle. In addition, in the bus bar 30, the wall surface of the bus bar-side through hole 50 on the coil end 92 side is a bus bar bonding surface 30b. The bus bar bonding surface 30b is formed in a tapered shape having an inclination angle corresponding to the coil bonding surface 92a, which is the reverse tapered surface 94. The lower surface 95 of the protrusion 93 is placed near the substrate-side through hole 40 of the first planar bus bar arrangement portion 14, and bonded by a bonding means such as conductive adhesive bonding, solder bonding, or laser welding bonding in a state where the coil bonding surface 92a and the bus bar bonding surface 30b abut each other. This bonding structure enables stable bonding without misalignment of the coil bonding surface 92a and the bus bar bonding surface 30b in the bonding step.

The bonding structure in FIG. 11C is a modified example of the bonding structure in FIG. 11B, in which a wall surface 17 separating the substrate-side through hole 40 and the first planar bus bar arrangement portion 14 is formed on the substrate-side through hole 40 side of the first planar bus bar arrangement portion 14. The side surface shape of the bus bar 30 on the coil end 92 side is formed in a stepped shape, and a stepped surface 30c is provided so as to be flush with the wall surface 17. In addition, the surface extending upward from the stepped surface 30c is the bus bar bonding surface 30b, which is formed in a tapered shape similar to the bonding structure of FIG. 11B. In addition, the surface of the protrusion 93 on the bus bar 30 side is the reverse tapered surface 94. In addition, the lower surface 95 of the protrusion 93 is placed on the wall surface 17 and the stepped surface 30c. The bond between the coil end 92 and the bus bar 30 is formed by a first bonding portion between the reverse tapered surface 94 and the bus bar bonding surface 30b, and a second bonding portion between the tip side of the lower surface 95 of the protrusion 93 and the stepped surface 30c. This provides the same effect as the bonding structure of FIG. 11B and the bonding strength is increased by the bond at the second bonding portion.

### <Method For Manufacturing Stator 4>

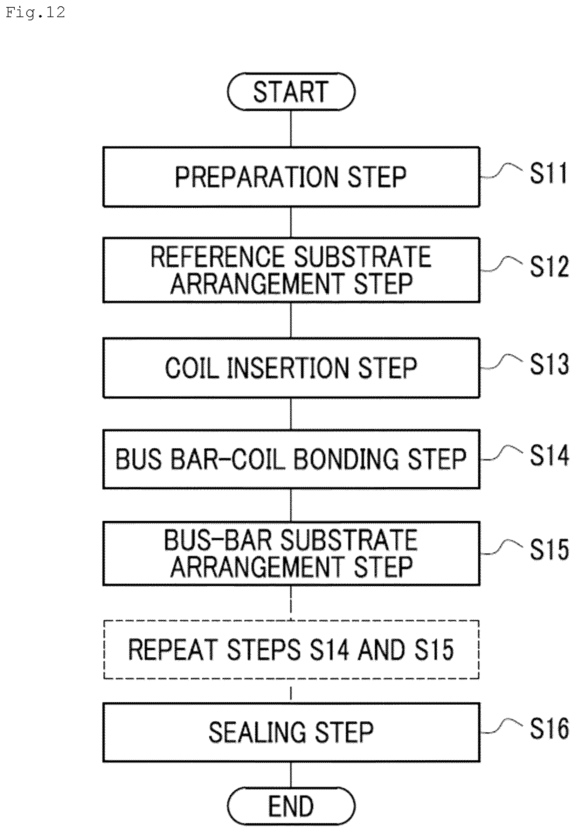

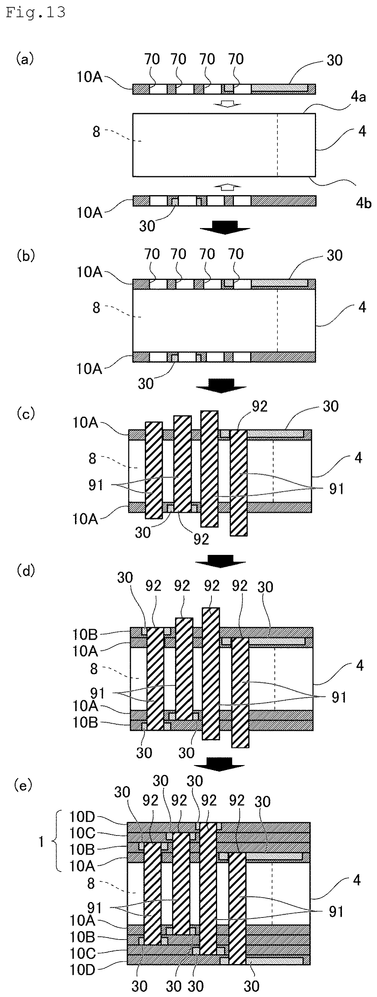

A description will be given of a manufacturing method for providing the stator 4 of the present embodiment with the coils 9. FIG. 12 is a flow chart showing the manufacturing steps of the stator 4. FIGS. 13A to 13E are charts schematically showing the manufacturing steps of the stator 4, focusing on the bonding of the coils 9 by the bus-bar substrate 10.

### Preparation Step S11:

First, the stator 4 in which a plurality of electromagnetic steel sheets are stacked in the axial direction and tightly fixed, four coil bodies 91a to 91d of a predetermined length formed into a straight line, and a plurality of the bus-bar substrates 10 (the first to fourth planar bus bar resin substrates 10A to 10D) are prepared. Each of the bus-bar substrates 10 is provided with the bus bar 30 according to the stacking position, that is, according to the coil bodies 91a to 91d (the coil ends 92) to be linked. In addition, the lengths of the coil bodies 91a to 91d are preferably set to not substantially protrude beyond the bus bar 30 to be bonded.

### Reference Substrate Arrangement Step S12:

Next, as shown in FIG. 13(a) and FIG. 13(b), the bus-bar substrates 10 (that is, the first planar bus bar resin substrates 10A) to be arranged closest to the stator 4 side are arranged at each of both ends 4a and 4b of the stator 4.

### Coil Insertion Step S13:

Next, as shown in FIG. 13(c), the four coil bodies 91a to 91d are arranged in the slot 8 such that the coil ends 92 are inserted into the through holes 70 provided in the first planar bus bar resin substrates 10A. The coil end 92 on the lower side and second from the left (the lower end of the coil body 91b) is arranged to be aligned with the lower side surface of the first planar bus bar resin substrate 10A on the lower side and to not protrude from the through hole 70. In addition, the coil end 92 on the upper side and fourth from the left (upper end of the coil body 91d) is arranged to be aligned with the upper side surface of the first planar bus bar resin substrate 10A on the upper side and to not protrude from the through hole 70. At this time, the coil ends 92 at both ends of the coil bodies 91a to 91d are inserted into the through holes 70 of the first planar bus bar resin substrate 10A, thus, the positions of the coil bodies 91a to 91d in the slot 8 are determined with high precision.

### Bus Bar-Coil Bonding Step S14:

When arranging the first planar bus bar resin substrate 10A, the coil ends 92 of the coil bodies 91b and 91d to be bonded to the bus bar 30 of the first planar bus bar resin substrate 10A are bonded by adhesive, welding, or the like. Here, the coil end 92 on the lower side and second from the left is bonded to the bus bar 30 of the first planar bus bar resin substrate 10A on the lower side, and the coil end 92 on the upper side and fourth from the left is bonded to the bus bar 30 of the first planar bus bar resin substrate 10A on the upper side. The coil body 91d bonded to the bus bar 30 of the first planar bus bar resin substrate 10A on the upper side in the figure and the coil body 91b bonded to the first planar bus bar resin substrate 10A on the lower side are positioned in the vertical direction by the bonding of the coil bodies 91d and 91b to the bus bar 30. Meanwhile, the coil bodies 91a and 91c that are not bonded to the bus bars 30 of the upper and lower first planar bus bar resin substrates 10A are fixed in position in the penetration direction (vertical direction in the figure) of the through hole 70 by a predetermined jig. However, in cases such as where a jig is not used, the positions are not determined and it is expected that the positions of the coil bodies 91a and 91c will shift depending on the posture of the stator 4. For example, in the coil ends 92 of those coil bodies 91a and 91c, a temporary positioning structure formed of small protrusions made of resin material may be provided on the side surface of a boundary portion that protrudes exactly from the first planar bus bar resin substrate 10A to enable easy attachment and detachment.

### Bus-Bar Substrate Arrangement Step S15:

After the bonding of the coil bodies 91b and 91d (the coil ends 92) by the first planar bus bar resin substrate 10A is completed, the second planar bus bar resin substrate 10B is stacked on the first planar bus bar resin substrate 10A. At this time, the coil ends 92 of the coil bodies 91a and 91c other than the coil bodies 91b and 91d bonded by the first planar bus bar resin substrate 10A are inserted into the through holes 70 of the second planar bus bar resin substrate 10B. In the examples of FIG. 13, in the second planar bus bar resin substrate 10B on the lower side, sealing is carried out in the region corresponding to the coil ends 92 on the lower side of the coil bodies 91b bonded by the first planar bus bar resin substrate 10A, without providing the through holes 70. Similarly, in the second planar bus bar resin substrate 10B on the upper side, sealing is carried out in the region corresponding to the coil ends 92 on the upper side of the coil bodies 91d bonded by the first planar bus bar resin substrate 10A, without providing the through holes 70. In subsequent processing, in the second to fourth planar bus bar resin substrates 10B to 10D that are subsequently arranged, the through holes 70 are not provided in the regions where the coil ends 92 are bonded to the bus bar 30.

Next, as shown in FIG. 13(d), the bus bar 30 of the second planar bus bar resin substrate 10B is bonded to the coil end 92 (the lower end and the upper end of the coil body 91a) (S14), followed by arranging the third planar bus bar resin substrate 10C (S15), bonding the bus bar 30 of the third planar bus bar resin substrate 10C to the coil end 92 (the lower end of the coil body 91c and the upper end of the coil body 91b) (S14), arranging the fourth planar bus bar resin substrate 10D (S15), and bonding the bus bar 30 of the fourth planar bus bar resin substrate 10D to the coil end 92 (the lower end of the coil body 91d and the upper end of the coil body 91c) (S14). When the bonding of all the bus-bar substrates 10 (here, the first to fourth planar bus bar resin substrates 10A to 10D) to the coil ends 92 is finished, as shown in FIG. 13(e), the arrangement of the coils 9 in the slot 8 by the bus-bar substrate device 1 is finished.

### Sealing Step S16:

Finally, the slot 8 is filled with sealing resin to form the sealing layer 60.

In the above-described manufacturing method, the same steps are performed at both of the ends 4a and 4b of the stator 4. However, without being limited thereto, for example, the sealing step S16 may be carried out after carrying out the method up to the bus-bar substrate arrangement step S15 at one end 4a, bonding the coil end 92 and the bus bar 30 and stacking a predetermined number of the bus-bar substrates 10, and then bonding the coil end 92 and the bus bar 30 at the other end 4b and stacking a predetermined number of the bus-bar substrates 10.

In addition, the bonding of the coil ends 92 and the bus bar 30 was performed each time one of the bus-bar substrates 10 was arranged, but the bonding may be performed collectively after stacking a plurality of bus-bar substrates 10.

The present embodiment described above is summarized as follows.
1. A bus-bar substrate 10 including a resin substrate 11 (insulating substrate), and a bus bar 30 formed of a conductive metal, in which the bus bar 30 has planar bus-bar conductive portions (here, a first planar bus bar 31 and a second planar bus bar 32) formed in a planar shape on one surface (here, an upper surface 12) of the resin substrate 11, and the surface (the upper surface 12) of the resin substrate 11 on which the planar bus-bar conductive portions (the first planar bus bar 31 and the second planar bus bar 32) are provided is such that the planar bus-bar conductive portions (the first planar bus bar 31 and the second planar bus bar 32) and the resin substrate 11 are flush with each other.
   Due to this, it is possible to suppress the space required for bonding coil ends 92, in particular, the space in the vertical direction, and to realize a lower profile in a motor 100. Since the planar bus-bar conductive portions (the first planar bus bar 31 and the second planar bus bar 32) and the resin substrate 11 are flush with each other, it is possible to realize a stable stacked structure even when stacking a plurality of the bus-bar substrates 10.
2. The bus-bar substrate 10 according to 1, in which the bus bar 30 does not protrude beyond an outer shape (an outer line in top view) of the resin substrate 11.
   The bus bar 30 does not protrude to the outside (laterally) beyond the outer shape of the resin substrate 11 and thus does not extend to the outside from the outer shape of a stator 4, making it possible to suppress enlargement of the motor 100.
3. The bus-bar substrate 10 according to 1 or 2, in which the resin substrate 11 is formed of a resin composition cured body, and a linear expansion coefficient of the cured body at a temperature equal to or lower than a glass transition temperature is 50 ppm/K or less.
   As a result, even when heat is generated as a result of driving the motor, the arrangement of the resin substrate 11 and the bus bar 30 is not distorted and it is possible to favorably maintain the stacked state of the bus-bar substrates 10.
4. The bus-bar substrate 10 according to any one of 1 to 3, in which the resin substrate 11 is formed of a resin composition cured body, and the resin composition includes an epoxy resin or a phenol resin.
5. The bus-bar substrate 10 according to any one of 1 to 4, further including through holes 70 (a substrate-side through hole 40 and a bus bar-side through hole 50) that penetrate both the resin substrate 11 and the planar bus-bar conductive portions (the first planar bus bar 31 and the second planar bus bar 32).
6. The bus-bar substrate 10 according to 5, in which the through holes 70 (the substrate-side through hole 40 and the bus bar-side through hole 50) function as a positioning means for the vertical coil wires in the slots.
   Since the coil ends 92 are inserted into the through holes 70, it is possible to realize high positional accuracy control of coil bodies 91 in slots 8.
7. The bus-bar substrate 10 according to any one of 1 to 6, in which the resin substrate 11 is formed of a resin composition cured body, and a thermal conductivity of the cured body is 0.5 W/(m·K) or more.
   By making the resin substrate 11 of the bus-bar substrate 10 into a highly thermally conductive member, it is also possible to realize high heat dissipation from the coil end 92 portion.
8. A bus-bar substrate device formed by stacking a plurality of the bus-bar substrates 10 according to any one of 1 to 7.
9. The bus-bar substrate device 1 according to 8, in which the bus-bar substrate device 1 is attached to at least one end of the stator 4 in an axial direction, and the bus bar 30 forms part of a coil 9 that is arranged to span between slots 8 of the stator 4.
10. The bus-bar substrate device 1 according to 9, in which the coils 9 are rectangular wires, the rectangular wires have vertical coil wires (the coil bodies 91) arranged in the slots 8, and ends (the coil ends 92) of the vertical coil wires (the coil bodies 91) extending from the slot 8 are electrically connected to the bus bar 30.
11. The bus-bar substrate device 1 according to 10, further including the through holes 70 through which the ends (the coil ends 92) of the vertical coil wires (the coil bodies 91) are inserted and guided to be connectable to the bus bar 30.
12. A stator 4 for use in a motor 100, the stator including the bus-bar substrate device 1 according to any one of 8 to 11 at least at one end in an axial direction.
13. The stator 4 according to 12, in which the stator 4 has an annular shape when viewed from an end in the axial direction, and
   the bus-bar substrate device 1 is formed as a single annular-shaped element or a collective element of a plurality of elements arranged in a circumferential direction to form an annular shape when viewed from the end in the axial direction.
14. The stator 4 according to 12 or 13, in which the vertical coil wires (the coil bodies 91) are bare wires that are not covered with an insulating member.
15. A method for manufacturing a stator 4 having a coil wire (a coil 9) arranged between slots 8, the method including a preparation step of preparing a bus-bar substrate 10 having a resin substrate 11 (insulating substrate), a bus bar 30 formed of a conductive metal, and through holes 70 that penetrate both the resin substrate 11 and the bus bar 30, a bus-bar substrate arrangement step of arranging the bus-bar substrates 10 at axial direction ends (4a and 4b) of the stator 4, and a bus bar-coil connection step of arranging vertical coil wires (coil bodies 91) that form the coil wires (the coils 9) in the slots 8 of the stator 4 and inserting the vertical coil wires (the coil bodies 91) through the through holes 70 of the bus-bar substrate 10 to electrically connect the bus bar 30 and the vertical coil wires (coil ends 92 of the coil bodies 91).
16. The method for manufacturing the stator 4 according to 15, in which the bus-bar substrate arrangement step stacks and arranges a plurality of the bus-bar substrates 10 in order at one axial direction end (end 4a or 4b) of the stator 4.
17. The method for manufacturing the stator 4 according to 15 or 16, the method further including a slot sealing step of injecting a sealant (that is, forming a sealing layer 60) into the slots 8 after the bus bar-coil connection step is performed at least at one axial direction end (at least one among the ends 4a and 4b) of the stator 4.
18. The method for manufacturing the stator 4 according to any one of 15 to 17, in which the sealant (that is, the sealing layer 60) includes an epoxy resin or a phenol resin as a resin composition.
19. The method for manufacturing the stator 4 according to 18, in which the resin substrate 11 is formed of a resin composition cured body, and the resin composition of the resin substrate 11 is identical to the resin composition of the sealant (the sealing layer 60).
20. The method for manufacturing the stator 4 according to any one of 15 to 19, in which the bus bar-coil connection step electrically connects the vertical coil wires (the coil ends 92 of the coil bodies 91) and the bus bar 30 using at least one type of bonding selected from the group consisting of laser welding bonding, solder bonding, and conductive adhesive bonding.
21. The method for manufacturing the stator 4 according to any one of 15 to 20, in which the bus bar-coil connection step positions the vertical coil wires (the coil bodies 91) in the slots 8 by inserting the vertical coil wires (the coil bodies 91) through the through holes 70.
22. The method for manufacturing the stator 4 according to any one of 15 to 21, in which the vertical coil wires (the coil bodies 91) are bare wires that are not covered with an insulating member.

Embodiments of the present invention are described above, but the above are merely examples of the present invention and it is also possible to adopt various other configurations.

The present application claims priority based on Japanese Patent Application No. 2023-030930 filed on March 1, 2023 and Japanese Patent Application No. 2023-030932 filed on March 1, 2023, the disclosure of which is incorporated herein in its entirety.

### REFERENCE SIGNS LIST

1 bus-bar substrate device
2 rotor
4 stator
5 permanent magnet
6 yoke
7 teeth
8 slot
9 coil
10 bus-bar substrate
10A to 10D first to fourth planar bus bar resin substrates
11 resin substrate
14 first planar bus bar arrangement portion
15 second planar bus bar arrangement portion
30 bus bar
31 first planar bus bar
32 second planar bus bar
40 substrate-side through hole
50 bus bar-side through hole
60 sealing layer
70 through hole
71 to 75 first to fifth through hole
81 to 88 first to eighth through hole set
91 coil body
92 coil end
100 motor

## Claims

1. A bus-bar substrate comprising:
an insulating substrate; and
a bus bar formed of a conductive metal,
wherein the bus bar has planar bus-bar conductive portions formed in a planar shape on one surface of the insulating substrate, and
a surface of the insulating substrate on which the planar bus-bar conductive portions are provided is such that the planar bus-bar conductive portions and the insulating substrate are flush with each other.

2. The bus-bar substrate according to claim 1,
wherein the bus bar does not protrude beyond an outer shape of the insulating substrate.

3. The bus-bar substrate according to claim 1 or 2,
wherein the insulating substrate is formed of a resin composition cured body, and a linear expansion coefficient of the cured body at a temperature equal to or lower than a glass transition temperature is 50 ppm/K or less.

4. The bus-bar substrate according to claim 1 or 2,
wherein the insulating substrate is formed of a resin composition cured body, and the resin composition includes an epoxy resin or a phenol resin.

5. The bus-bar substrate according to claim 1 or 2, further comprising:
a through hole that penetrates both the insulating substrate and the planar bus-bar conductive portions.

6. The bus-bar substrate according to claim 5,
wherein the through hole functions as a positioning means for a rectangular wire to be arranged in a slot.

7. The bus-bar substrate according to claim 1 or 2,
wherein the insulating substrate is formed of a resin composition cured body, and a thermal conductivity of the cured body is 0.5 W/(m·K) or more.

8. A bus-bar substrate device formed by stacking a plurality of the bus-bar substrates according to claim 1 or 2.

9. The bus-bar substrate device according to claim 8,
wherein the bus-bar substrate device is attached to at least one end of a stator of a motor in an axial direction, and
the bus bar forms a part of a coil winding that is arranged to span between slots in the stator.

10. The bus-bar substrate device according to claim 9,
wherein the coil winding is a rectangular wire,
the rectangular wire has a vertical coil wire arranged in the slot, and
an end of the vertical coil wire extending from the slot is electrically connected to the bus bar.

11. The bus-bar substrate device according to claim 9, further comprising:
a through hole through which the end of the vertical coil wire is inserted and guided to be connectable to the bus bar.

12. A stator for use in a motor, the stator comprising:
the bus-bar substrate device according to claim 8, provided at at least one end in an axial direction.

13. The stator according to claim 12,
wherein the stator has an annular shape when viewed from the end in the axial direction, and
the bus-bar substrate device is formed as a single annular-shaped element or a collective element of a plurality of elements arranged in a circumferential direction to form an annular shape when viewed from the end in the axial direction.

14. The stator according to claim 12,
wherein a vertical coil wire is a bare wire that is not covered with an insulating member.

15. A method for manufacturing a stator having a coil wire arranged between slots, the method comprising:
a preparation step of preparing a bus-bar substrate having an insulating substrate, a bus bar formed of a conductive metal, and a through hole that penetrates both the insulating substrate and the bus bar;
a bus-bar substrate arrangement step of arranging the bus-bar substrate at an axial direction end of the stator; and
a bus bar-coil connection step of arranging a vertical coil wire that forms the coil wire in a slot in the stator and inserting the vertical coil wire through the through hole of the bus-bar substrate to electrically connect the bus bar and the vertical coil wire.

16. The method for manufacturing a stator according to claim 15,
wherein, in the bus-bar substrate arrangement step, a plurality of the bus-bar substrates are stacked and arranged one by one at one axial direction end of the stator.

17. The method for manufacturing a stator according to claim 15 or 16, the method further comprising:
a slot sealing step of injecting a sealant into the slots after the bus bar-coil connection step is performed at least at one axial direction end of the stator.

18. The method for manufacturing a stator according to claim 17,
wherein the sealant includes an epoxy resin or a phenol resin as a resin composition.

19. The method for manufacturing a stator according to claim 18,
wherein the insulating substrate is formed of a resin composition cured body, and the resin composition of the insulating substrate is identical to the resin composition of the sealant.

20. The method for manufacturing a stator according to claim 15 or 16,
wherein, in the bus bar-coil connection step, the vertical coil wire and the bus bar are electrically connected using at least one type of bonding selected from the group consisting of laser welding bonding, solder bonding, and conductive adhesive bonding.

21. The method for manufacturing a stator according to claim 15 or 16,
wherein, in the bus bar-coil connection step, the vertical coil wire is positioned in the slot by inserting the vertical coil wire through the through hole.

22. The method for manufacturing a stator according to claim 15 or 16,
wherein the vertical coil wire is a bare wire that is not covered with an insulating member.
